# EUROPEAN PATENT SPECIFICATION

(11) **EP 0 562 314 B1**
(45) Date of publication and mention of the grant of the patent: **28.08.1996**
(21) Application number: 93103362.5
(22) Date of filing: 03.03.1993
(51) Int. Cl.: A01K 63/04

(54) **Water treatment equipment**
Vorrichtung zur Behandlung von Wasser
Equipement pour le traitement d'eau

(30) Priority: 23.03.1992 IT RE920020
(43) Date of publication of application: 29.09.1993
(73) Proprietor: Becchi, Silvano, Cadelbosco Di Sopra (Reggio Emilia) (IT)
(72) Inventor: Becchi, Silvano, Cadelbosco Di Sopra (Reggio Emilia) (IT)
(74) Representative: Lanzoni, Luciano

(56) References cited:
- EP-A- 0 088 850
- DE-A- 3 417 039
- US-A- 4 409 107

## Description

This invention concerns an aeration and/or oxygenation equipment for water contained in a basin. Such a device is known for example from DE-A-3,417,039 and which discloses the features contained in the preamble portion of claim 1.

This kind of equipment is well-known and used in tanks for fish farming and aquaculture in general, fishing basins, aeration tanks in water treatment plants, in treating eutrophic lakes, and similar uses.

The purpose of this kind of equipment is to improve the state of the fishes' environment and of the water as they aerate and possibly oxygenate, degas, make the water circulate, destratify it and thaw it, and all this using a single piece of equipment.

Thanks to such equipment it is therefore possible, depending on the type of use, to intensify fish production, preventing the diseases connected with this kind of activity, reclaiming waters and the environment.

The equipment currently used to carry on the above functions may be classified as follows:

### - PADDLE-WHEELS

They are virtually paddle-wheels partially submersed in the water. As they rotate the water is aerated and degassed, but only on the surface. The circulation produced is limited, too, and the mass of water is basically not oxygenated and destratified. In any event, paddle-wheels cannot work in places with an outside temperature lower than 0°C as the movement of the paddle-wheels facilitates ice formation that stops it from working.

### - SURFACE SPLASHERS

They comprise an electronic motor on a vertical axis with an underlying marine type propeller, all of it being supported by a float. The propeller pushes the water upwards which then falls back down giving rise to a characteristic mushroom shape. They produce degassing, while aeration only occurs on the surface, with hardly any circulation since they do not normally have an adequate power. They have a very localised action, they do not enable destratification, and neither do they prevent ice formation.

### - BLOWERS

They comprise a rotary pump or a rotary blower of the root type, or even a centrifugal blower, positioned outside the tank, and by diffusors composed of perforated pipes or by diffusors with microporous blocks to produce fine bubbles. It is necessary to use high powers, so they are noisy, so much so as to need silencers. They require fixed pipes to distribute the blown air; and sometimes they are subjected to clogging, especially the ones with fine bubble diffusors. They have considerable installation costs.

### - WATER MIXERS

They are basically composed of a propeller driven by an electric motor, the whole being moved by movable means of a hoist on vertical runners fixed to the tank walls or, at a fixed depth, to floating structures.

They include a chamber that is vacuumed following the operation of the propeller (called the decompression chamber) and the chamber has a circular outlet that sorrounds the near end of the propeller, and an inlet connected to an air-suction hose, the opposite end of which emerges above the open surface of the mass of water. These mixers enable good circulation and destratification of the mass of water, but they have a limited aeration capacity, they do not degas, and some types are not able to oxygenate. They can be used on very extensive surfaces and by means of fixed and bulky installations, besides involving rather high installed power. A further inconvenience lies in that the air supplied is not micronized.

### - AERATORS

They consist of a floating structure that bears a propeller driven by an electric motor or a combustion engine. They include a decompression chamber like the one of the previous equipment, with the difference that the whole equipment, except for the propeller, emerges from the open surface of the basin. Therefore, an air-suction pipe is not necessary. The propeller is therefore intended to remain just under the surface and cannot operate at proper depth. However, it can be oriented in the vertical plane, the need of keeping the propeller submersed limiting the degree of orientation. These aerators permit good circulation, destratification, and aeration, but they do not allow oxygenation, nor degassing as it is not possible to orient the propeller towards the surface. Lastly, as the motor is out of the water it suffers the effects of atmospheric agents.

Apart from the above mentioned drawbacks of the single kinds of equipment described in each paragraph, we may generalise and say that either they are limited to only a few, specific functions or they are limited in their field of application.

This invention proposes to get round the above mentioned drawbacks, making an apparatus that can perform all the required functions, i.e. aeration, oxygenation, degassing, circulation, destratification and deglaciation.

The above mentioned aim is achieved by the apparatus being embodied as indicated by the features in the characterizing portion of claim 1.

Such an apparatus is able to perform all the above listed functions, i.e.:
- if the propeller shaft is set upright, with the propeller facing upwards, just under the open surface of the tank, the equipment mainly acts as the well-known surface splasher;
- if the propeller shaft is tilted to the vertical (preferably by about 45°), still with the propeller turned upwards and set just under the surface, the equipment aerates and degasses at the surface, with similar effects to those obtained by a paddle-wheel, but with a better circulation;
- if the shaft is set parallel to the surface, with the propeller still just under the surface, there is good circulation like the one obtained with the noted water mixers and aerators, as well as an effect of deglaciation;
- if the shaft is tilted to the horizontal (for example, by 30°), with the propeller turned downwards and set at a depth not far off the bottom of the basin, there is good destratification and circulation like with the known water mixers, carrying off the sediment on the bed, especially if a series of these devices are used, arranged to create a circulation of air that besides oxygenating the water permits a "controlled" evacuation of the sediment as well;
- if pure oxygen, or a mixture of air and oxygen, is passed through the suction pipe, there is an oxygenation effect similar to the one obtained by means of the known water mixers fitted with a suction pipe.

In conclusion, thanks to the equipment of this invention, suitably arranged by adjusting the orientation of the propeller shaft and its depth, depending on the desired effect, it is possible to cover all the needs connected with the particular technical field stated at the beginning of this description.

According to one embodiment of this invention, the operative unit is borne by the floating structure by means of at least one support pipe that also serves as a suction pipe. This pipe, therefore, has one end that must always be above the open surface of the water in the basin.

The invention will be more easily understood on reading the following description of one of its embodiments given merely by way of an example. This description refers to the enclosed drawings where:

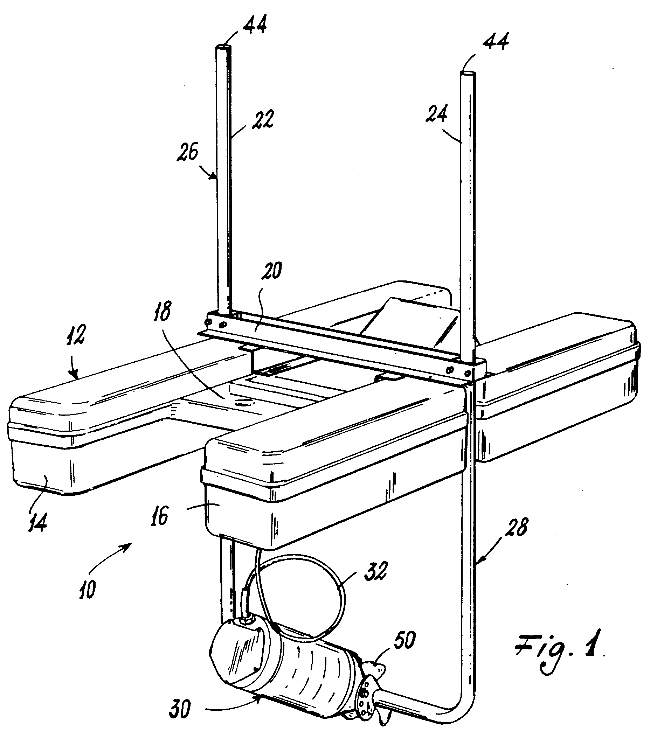

Fig. 1 is a perspective view of the water treatment equipment according to this invention;
Fig. 2 is a side view where the operative unit is shown at three different depths depending on the kind of use;
Fig. 3 is a front view with the operative unit set at a medium depth;
Fig. 4 is a partial enlarged, cross-section of the operative unit only, taken along a vertical plane passing through its longitudinal axis.

An analysis of the figures shows that apparatus 10 is chiefly composed of a floating structure 12 comprising two plastic parallel hollow floats 14 and 16 mutually connected by a horizontal platform 18, also made of plastic, integral with the floats 14 and 16. A metal crossbar 20 is fixed to the upper part of the floating structure 12.

The two ends of the crossbar 20 have vertical guide holes in which vertical arms 22 and 24 of corresponding L-shaped pipes 26 and 28 can simultaneously slide. There are conventional stop devices to fix these L-shaped pipes 26 and 28 in position so that they sink by the desired amount.

Obviously, the length of the vertical arms 22 and 24 of the pipes 26 and 28 shall be determined by the maximum depth at which an operative unit 30 has to be located, the unit being swivelling fixed at the lower ends of the pipes 26 and 28 so to be able to assume different angular positions in the vertical plane. The upper ends 44 of the pipes 26 and 28 must in any case emerge from the open surface of the basin the apparatus 10 is floating in.

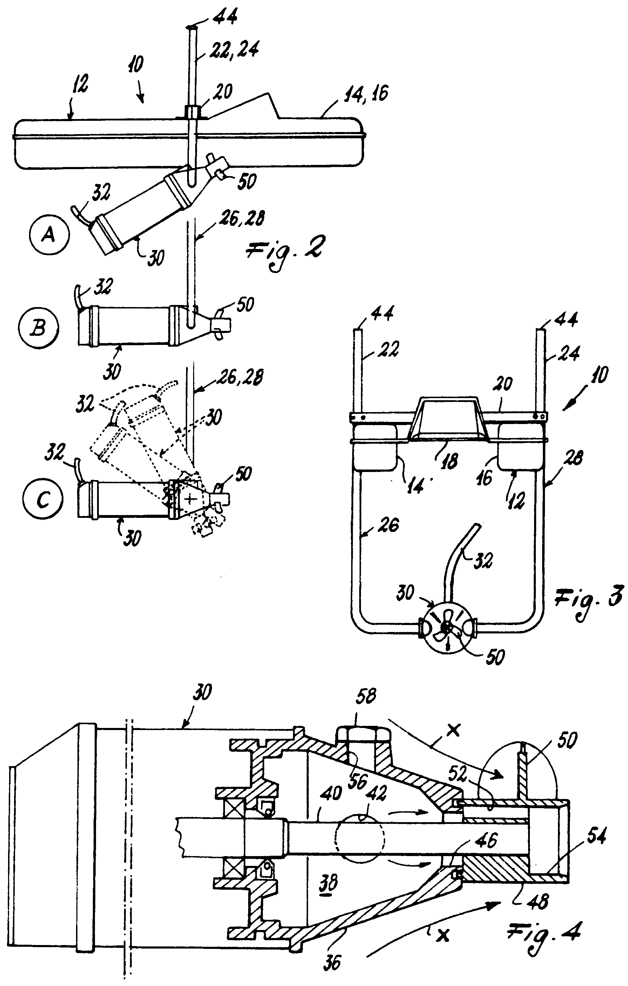

In fig. 2, by way of example, there are three different positions (indicated in the figure by A, B, and C respectively) of the operative unit 30 relative to the floating structure 12, in the same figure being also shown different possible orientations of the operative unit 30.

The latter, in fig. 3, is shown at the same depth as position B in fig. 2.

The operative unit 30 is seen better in fig. 4 which shows that the unit is composed of a cylindrical, sealed part 34 containing an electric motor (not shown) and the corresponding transmission member, and a largely frusto-conical part 36 shown in cross-section in the figure. Part 36 encloses a vacuum chamber 38 crossed longitudinally by a coaxial shaft 40 driven by the above mentioned motor. The wall of the frustoconical part 36 is pierced by two symmetrically opposed openings (fig. 4 shows only one of them 42) connecting the chamber 38 with the pipes 24 and 26 respectively (not shown in fig.4). The pipes serve as air-suction pipes as well as supports for the operative unit 30.

The end of the frusto-conical part 36 has a circular opening 46 from which the shaft 40 extends, leaving an annular aperture free, however. The external end of the shaft 40 has a hub 48, keyed on it, fixed to a propeller 50, which is then entirely outside the chamber 38. Internally the hub 48 has channels, only one of which is visible (52), circumferentially equidistant and parallely extending to the shaft 40. They connect the chamber 38 with an air outlet opening 54 obtained in the hub 48.

There will clearly be a conventional rotational seal joint between the hub 48 and the frustoconical part 36 to prevent water seeping in form the outside when the propeller is rotating.

The vacuum chamber 38 has another opening 56 that in fig. 4 is closed by a nut 58. When the nut 58 is removed, it will be possible to connect the opening 56 with a hose (not shown) to feed oxygen, or to introduce disinfectants, medicines and the like, whether in a liquid, powder, or granular form, which will then easily be dissolved in the mass of water contained in the basin. However, it must be clear that oxygen and the above mentioned substances may also be introduced through the L-shaped pipes 26, 28; or the latter may merely have the function of supporting the operative unit, so the air, too, will be sucked through the above mentioned hose connected to the opening 56.

The motor of the operative unit 30 runs in an oil bath, so it needs no maintenance. The materials used to build the equipment, being in contact with water, are corrosion-proof, again to reduce maintenance to a minimum and to extend the service life of the apparatus as much as possible.

Operation of the equipment is very simple and should already be clear from what it has been stated so far. However, it will briefly describe for greater clarity.

By engaging the electric motor contained in the cylindrical part 34 of the operative unit 30 - that may be a single - or three-phase motor, for example with a rated power of 0.6 - 0.9 kW, with 2800 rpm - the shaft 40, and consequently the hub 48 and the propeller 50 will rotate. The latter will move the surrounding water according to the trajectories indicated diagrammatically by the arrows "x" in fig. 4. This movement of the water will suck the water initially filling the chamber 38, emptying it, and creating a pressure drop inside it. This will create air to be sucked through the opening 42, and oxygen if the additional opening 56 is open and used for this purpose. The sucked air, possibly with added oxygen, will then be sucked through the channels 52 on the hub 48 to mix with the outside water.

If the rotation speed of the motor is sufficiently high (for example around 2800 pm) the air will be suitably broken up into microbubbles; so there is an optimum aeration and/or oxygenation thanks to the high air/water contact surface thus obtained.

Depending on the orientation and on the depth of the operative unit 30, it is possible to obtain all the desired effects described above and this by using a water treatment equipment that is extremely simple, strong, with a long service-life, easy to use even by unskilled personnel, besides having simple, cost-effective maintenance.

In a constructional variant, the equipment may include an external screen around the propeller area, as the screen is preferably made of a meshed material, to create a physical protection barrier.

## Claims

1. A water treatment apparatus (10) comprising an operative unit (30) having a motor driven propeller (50), said operative unit (30) being adjustable in a vertical plane and comprising a vacuum chamber (38) having at least one air inlet (42) connected to a suction pipe (*26*, *28*) that is
adapted when said operative unit (30) is submerged to emerge above the open surface of the water, said vacuum chamber (38) also having at least one air outlet (46), and that said propeller (50) being located completely outside of said vacuum chamber (38),
**characterised in that**
said operative unit (30) is adapted, when submerged in water, to be supported at an adjustable depth by a floating structure (12) and said propeller (50) has a hollow hub (48) communicating the outside of said vacuum chamber with said at least one air outlet (46), and that a conventional rotational seal device is located between said hub (48) and a fixed part (36) of said operative unit (30).

2. An *apparatus* according to claim 1, where the operative unit (30) is *connected to* the floating
structure (12) by means of at least one support pipe (26, 28) *which includes* said suction pipe.

3. An *apparatus* according to claim 2, where the floating structure (12) is composed of two parallel hollow floats (14, 16) connected *one* to each other by a platform (18).

4. An apparatus according to claim 2, where there are two support pipes (26, 28) of "L" shape, whose respective upright arms (22, 24) *are slidably connected to said floating structure by lockable means in order to* simultaneously slide in a vertical direction.

5. An *apparatus* according to claim 4, where the *vacuum* chamber (38) *presents an* opening
(56) connectable to a *feeding flexible pipe*.

6. An *apparatus* according to claim *1*, *where said operative unit (30) is supported to said support pipes (26*, *28) in corrispondence of their horizontal arms in order to adjusting its orientation*.

## Patentansprüche

1. Vorrichtung (10) zur Behandlung von Wasser, eine Betriebseinheit (30) enthaltend, die eine Motor betriebene Schraube (50) aufweist, wobei die besagte Betriebseinheit (30) in einer vertikalen Ebene einstellbar ist, und eine Vakuumkammer (38) enthaltend, die mindestens einen Lufteinlaß (42) aufweist, der mit einer Saugleitung (26, 28) verbunden ist, die angepaßt ist, wenn die besagte Betriebseinheit (30) untergetaucht ist, um oberhalb der freien Wasseroberfläche hervorzustehen, die besagte Vakuumkammer (38) weiterhin mindestens einen Luftauslaß (46) aufweist, und daß die besagte Schraube (50) vollständig außerhalb der besagten Vakuumkammer (38) angeordnet ist, dadurch gekennzeichnet, daß die besagte Betriebseinheit (30), wenn in Wasser untergetaucht ist, angepaßt ist, um in einer einstellbaren Tiefe von einer Schwimmkonstruktion (12) getragen zu werden, und die besagte Schraube (50) eine Hohlnabe (48) aufweist, die die Außenseite der besagten Vakuumkammer mit dem besagten mindestens einen Luftauslaß (46) verbindet, und daß eine konventionelle Drehdichtvorrichtung zwischen der besagten Nabe (48) und einem starren Teil (36) der besagten Betriebseinheit (30) angeordnet ist.

2. Vorrichtung nach Anspruch 1, wobei die Betriebseinheit (30) über wenigstens ein Stützrohr (26, 28) mit der Schwimmkonstruktion (12) verbunden ist, das die besagte Saugleitung einschließt.

3. Vorrichtung nach Anspruch 2, wobei die Schwimmkonstruktion (12) aus zwei parallel zueinander stehenden, hohlen Schwimmern (14, 16) besteht, die miteinander durch eine Plattform (18) verbunden sind.

4. Vorrichtung nach Anspruch 2, wobei zwei L-förmige Stützrohre (26, 28) vorgesehen sind, deren jeweiliger aufrechtstehender Arm (22, 24) verschiebbar mit der besagten Schwimmkonstruktion durch festklemmbare Mittel verbunden ist, um gleichzeitig in einer Vertikalrichtung zu gleiten.

5. Vorrichtung nach Anspruch 4, wobei die Vakuumkammer (38) eine Öffnung (56) aufweist, an der eine biegsame Speiseleitung anschließbar ist.

6. Vorrichtung nach Anspruch 1, wobei die besagte Betriebseinheit (30) an den besagten Stützrohren (26, 28) entsprechend deren Horizontalarme zur Einstellung ihrer Ausrichtung abgestützt ist.

## Revendications

1. Equipement pour le traitement d'eau (10) comportant une unité de travail (30) ayant une hélice (50) entraînée par un moteur, ladite unité de travail (30) étant réglable dans un plan vertical et comprenant une chambre de décompression (38) ayant au moins une entrée (42) de l'air reliée à un tuyau d'aspiration (26, 28) qui est apte, quand ladite unité de travail (30) est submergée, à déboucher au-dessus du fil de l'eau, ladite chambre de décompression (38) ayant également au moins une sortie (46) de l'air, et ladite hélice (50) étant positionnée complètement à l'extérieur de ladite chambre de décompression (38),
caractérisé en ce que
ladite unité de travail (30) est destinée, quand elle est submergée dans l'eau, à être supportée à une profondeur réglable par une structure flottante (12) et ladite hélice (50) a un moyeu creux (48) mettant en communication l'extérieur de ladite chambre de décompression avec au moins une sortie de l'air (46), et en ce qu'un conventionnel dispositif à rotation assurant l'étanchéité est situé entre ledit moyeu (48) et une partie fixe (36) de ladite unité de travail (30).

2. Equipement selon la revendication 1, dans lequel l'unité de travail (30) est reliée à la structure flottante (12) par au moins un tuyau support (26, 28) agissant également en tant que tuyau d'aspiration.

3. Equipement selon la revendication 2, dans lequel la structure flottante (12) se compose de deux flotteurs creux parallèles (14, 16) reliés l'un à l'autre par une plate-forme (18).

4. Equipement selon la revendication 2, dans lequel on prévoit deux tuyaux supports (26, 28) en forme de "L", dont les respectifs bras verticaux (22, 24) sont reliés de manière coulissante à ladite structure flottante par des moyens qui peuvent être bloqués, de sorte qu'ils coulissent simultanément dans une direction verticale.

5. Equipement selon la revendication 4, dans lequel la chambre de décompression (38) est pourvue d'une ouverture (56) qui peut être reliée à un tuyau flexible d'alimentation.

6. Equipement selon la revendication 1, dans lequel ladite unité de travail (30) est suspendue auxdits tuyaux supports (26, 28) en correspondance de leurs bras horizontaux, dans le but de régler son orientation.
